# EUROPÄISCHE PATENTSCHRIFT

(11) **EP 4 313 541 B1**
(45) Veröffentlichungstag und Bekanntmachung des Hinweises auf die Patenterteilung: **02.04.2025**
(21) Anmeldenummer: 22708509.9
(22) Anmeldetag: 14.02.2022
(51) Int. Cl.: B29C 49/42, B29C 49/06, B29C 49/12, B29C 49/64, B29K 67/00, B29L 31/00

(54) **TRANSFERVORRICHTUNG UND BEHÄLTERBEHANDLUNGSMASCHINE FÜR KUNSTSTOFFBEHÄLTER**
TRANSFER DEVICE AND CONTAINER HANDLING MACHINE FOR PLASTIC CONTAINER
DISPOSITIF DE TRANSFERT ET MACHINE DE MANIPULATION DE RÉCIPIENTS POUR DES RÉCIPIENTS EN MATIÈRE PLASTIQUE

(30) Priorität: 22.03.2021 DE 102021107002
(43) Veröffentlichungstag der Anmeldung: 07.02.2024
(73) Patentinhaber: KHS GmbH, 44143 Dortmund (DE)
(72) Erfinder: KLEIN, Jan Fabian, 22337 Hamburg (DE); KLATT, Dieter, 22147 Hamburg (DE)
(74) Vertreter: Eisenführ Speiser
(86) Internationale Anmeldenummer: PCT/EP2022/053493
(87) Internationale Veröffentlichungsnummer: WO 2022/199938

(56) Entgegenhaltungen:
- EP-A1- 3 088 161
- FR-A1- 3 062 643
- FR-A1- 3 066 137
- US-A1- 2018 237 230

## Beschreibung

Die Erfindung betrifft eine Transfervorrichtung für Kunststoffbehälter, die eine Längsachse aufweisen, und die Transfervorrichtung weist wenigstens eine, bevorzugt mehrere, auf einer geschlossenen Bahn umlaufende Haltevorrichtungen für jeweils einen der Kunststoffbehälter und eine Orientierungsvorrichtung zum Drehen des Kunststoffbehälters mit einem vorgebbaren Drehwinkel um seine Längsachse auf, wobei die Kunststoffbehälter mittels der wenigstens einen Haltevorrichtung von einem Aufnahmebereich zu einem Abgabebereich transportiert werden. Durch die Haltevorrichtung ist eine bestimmungsgemäße Haltelage für die Längsachse der Kunststoffbehälter vorgegeben. Dazu weist die Haltevorrichtung Haltemittel auf.

Die Erfindung betrifft des Weiteren eine Behälterbehandlungsmaschine für Kunststoffbehälter, die eine Längsachse aufweisen, mit einer entsprechenden Transfervorrichtung. Solche Behälterbehandlungsmaschinen sind zum Beispiel Blasmaschinen, Beschichtungsmaschinen, Etikettiermaschinen, Füller oder andere Maschinen, die im Zusammenhang mit der Behandlung oder Bearbeitung von Vorformlingen oder von aus Vorformlingen hergestellten Behältern Verwendung finden. Eine Behälterbehandlungsmaschine kann auch aus mehreren der vorstehend genannten Maschinen zusammengesetzt sein, zum Beispiel in verblockter Bauweise.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor mittels der Heizeinrichtung temperierte Vorformling durch biaxiale Orientierung zu einem Behälter expandiert wird. Die Expansion erfolgt in der Regel mit Hilfe von Druckluft, die in den zu expandierenden Vorformling eingeleitet wird. Der verfahrenstechnische Ablauf bei einer derartigen Expansion des Vorformlings wird in der DE 43 40291 erläutert. Die einleitend erwähnte Einleitung des unter Druck stehenden Gases umfasst auch die Druckgaseinleitung in die sich entwickelnde Behälterblase sowie die Druckgaseinleitung in den Vorformling zu Beginn des Blasvorganges. Es ist bekannt und vorteilhaft, diese Umformung durch den Einsatz einer Reckstange zu unterstützen.

Der grundsätzliche Aufbau einer Blasstation zu einer solchen Behälterformung wird in der DE 42 12 583 beschrieben. Möglichkeiten zur Temperierung der Vorformlinge werden in der DE 23 52 926 erläutert.

Gemäß einem typischen Weiterverarbeitungsverfahren werden die wie vorstehend beschrieben durch Blasformen hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockten Blas-Füll-Einrichtung zusammenzufassen, wobei weiterhin das Blasformen und das Füllen an gesonderten Maschinenkomponenten und zeitlich nacheinander erfolgen.

Es wurde weiterhin bereits vorgeschlagen, Behälter, insbesondere auch in Form von Flaschen, aus thermisch konditionierten bzw. temperierten Vorformlingen herzustellen und dabei gleichzeitig mit einem flüssigen Füllgut zu befüllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter umgeformt wird. Derartige Verfahren, bei denen ein gleichzeitiges Formen und Füllen des jeweiligen Behälters erfolgt, können auch als hydraulische Umformverfahren oder als hydraulische Behälterformung bezeichnet werden. Auch hier ist es bekannt, diese Umformung durch den Einsatz einer Reckstange zu unterstützen.

Bei einem Formen der Behälter aus den Vorformlingen durch das Füllgut selbst, d.h. unter Verwendung des Füllgutes als hydraulisches Druckmedium, wird für das Formen und Füllen der Behälter nur noch eine Maschine benötigt, die dafür allerdings eine erhöhte Komplexität aufweist. Ein Beispiel für eine solche Maschine zeigt die US 7,914,726 B2. Ein weiteres Beispiel zeigt die DE 10 2010 007 541 A1. Eine Blasmaschine kann also auch mit einem flüssigen Umformmedium arbeiten, statt mit der weiter oben genannten Druckluft.

Innerhalb der oben genannten beiden Vorrichtungsarten zur Blasformung können die Vorformlinge sowie die fertigen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen. Greifzangen und sonstige Zangenanordnungen, bestehend aus einer Zangenbasis und aus in der Regel daran schwenkbar befestigten Zangenarmen sowie aus einem die Zangenbasis tragenden Zangenträger, greifen in der Regel von außen an den Vorformling bzw. an den Behälter an. Häufig wird zum Zwecke des Angreifens der Neckring des Vorformlings bzw. des Behälters verwendet. Zangenanordnungen haben den Vorteil, dass der Mündungsbereich des Vorformlings bzw. des Behälters frei zugänglich bleibt, zum Beispiel um Behandlungsorgane in den Vorformling einzuführen oder um Behandlungsorgane auf den Mündungsbereich aufzusetzen.

Eine Handhabung von Behältern unter Verwendung von Übergaberädern wird beispielsweise in der DE 199 06 438 bei einer Anordnung des Übergaberades zwischen einem Blasrad und einer Ausgabestrecke beschrieben. Übergaberäder, die auch als Transferräder bezeichnet werden, weisen in der Regel mehrere Tragarme auf, die Handhabungseinrichtungen tragen. Solche Transferräder sind zum Beispiel eingangsseitig einer Blasmaschine und auch ausgangsseitig einer Blasmaschine angeordnet. Solche Transferräder sind zum Beispiel auch angeordnet zwischen unterschiedlichen Behälterbehandlungsmaschinen, um den Transfer von einer ersten Behälterbehandlungsmaschine zu einer zweiten Behälterbehandlungsmaschine zu realisieren. Solche Transferräder können aber auch innerhalb einer Behälterbehandlungsmaschine vorgesehen und angeordnet sein, zum Beispiel um Vorformlinge oder daraus hergestellte Behälter von einer Behandlungseinrichtung zu einer nächsten Behandlungseinrichtung zu transferieren, z. B. von einer Heizeinrichtung zu einer Blaseinrichtung.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Bei Behältern, die wenigstens abschnittsweise einen nicht runden Querschnitt aufweisen, ist aufgrund dieser Bauform oftmals eine bestimmte Orientierung des Behälters erforderlich, um den Behälter problemlos aus der Form entnehmen zu können. Die derart vorgegebene Orientierung ist oftmals im weiteren Verlauf der Behälterbehandlung unvorteilhaft, so dass eine kontrollierte Drehung der Behälter erforderlich ist.

In der DE 10 2016 001 755 wird für diesen Zweck eine Zangenanordnung vorgeschlagen, die mittels eines Viergelenks eine Drehung der Behälter ermöglicht.

Diese Lösung ist jedoch nicht besonders flexibel und leicht anpassbar an sich ändernde Drehwinkel, z.B. bei einer Umstellung der zu produzierenden Behälter, da beispielsweise der Drehwinkel durch die Geometrie des Viergelenks vorgegeben ist.

Die FR 3 062 643 A1 beschreibt einen Transportdorn für Vorformlinge, der zusammen mit weiteren Transportdornen zu einer umlaufenden Kette verbunden ist. Solche Ketten sind bekannt für das Transportieren der Vorformlinge durch eine Heizung. Wie ebenfalls aus dem Stand der Technik bekannt, sollen die Vorformlinge dabei kontinuierlich um ihre Längsachse drehen, um in Umfangsrichtung gleichmäßig beheizt zu werden. Hierzu weist der Transportdorn in seinem oberen Bereich ein Zahnrad auf, das mit einer entsprechenden Gegenstruktur kämmt. Dieser Stand der Technik betrifft also das kontinuierliche Drehen von Vorformlingen, nicht aber das gezielte Drehen um einen bestimmten Winkel.

Die FR 3 066 137 A1 zeigt ein gezieltes Ausrichten eines Vorformlings. Der Vorformling weist eine Markierung auf und wird von einem Greifer gehalten, von einem Drehdorn in Rotation versetzt und bei Anlage der Markierung gegen einen Stopper festgehalten. Dieser Stand der Technik betrifft kein Drehen um einen vorbestimmten Winkel, sondern ein Drehen, bis der Vorformling nicht weiterdrehen kann, weil er gegen ein Stoppelement anschlägt.

Ausgehend von diesem Stand der Technik liegt der Erfindung die Aufgabe zugrunde, eine alternative Lösung zum kontrollierten Drehen von Behältern bereitzustellen, wobei insbesondere hohe Flexibilität und einfache Anpassung an verschiedene Behälterformate ermöglicht werden soll.

Diese Aufgabe wird erfindungsgemäß gelöst durch die Gegenstände der unabhängigen Ansprüche. Vorteilhafte Weiterbildungen der Erfindung sind in den abhängigen Ansprüchen angegeben.

Diese Aufgabe wird gemäß der Erfindung gelöst durch eine Transfervorrichtung für eine Längsachse aufweisende Kunststoffbehälter umfassend wenigstens eine auf einer geschlossenen Bahn umlaufende Haltevorrichtungen für jeweils einen der Kunststoffbehälter und eine Orientierungsvorrichtung zum Drehen des Kunststoffbehälters mit einem vorgebbaren Drehwinkel um seine Längsachse, wobei die Kunststoffbehälter mittels der wenigstens einen Haltevorrichtung von einem Aufnahmebereich zu einem Abgabebereich transportiert werden, wobei die Haltevorrichtung (81) Haltemittel (82) aufweist, durch die eine bestimmungsgemäße Haltelage für die Längsachse der Kunststoffbehälter vorgegeben ist, wobei die erfindungsgemäße Transfervorrichtung dadurch weitergebildet ist, dass die Orientierungsvorrichtung ein Drehlager für die Drehung des mittels der Haltevorrichtung transportierten Kunststoffbehälters aufweist, wobei das Drehlager koaxial zu der bestimmungsgemäßen Haltelage für die Längsachse der Kunststoffbehälter angeordnet ist.

Der Begriff des Behälters steht dabei sowohl für die vorstehend schon beschriebenen Vorformlinge, als auch für die daraus hergestellten Flaschen oder sonstigen Behälter.

Im Rahmen der Erfindung ist insbesondere vorgesehen, dass der Kunststoffbehälter im Aufnahmebereich von einer vorlaufenden Transfer- oder Fördervorrichtung übernommen und im Abgabebereich an eine nachlaufende Transfer- oder Fördervorrichtung weitergegeben wird. Für einen störungsfreien Betrieb müssen die entsprechenden Übergabepositionen zwischen der Haltevorrichtung der erfindungsgemäßen Transfervorrichtung und solchen der vor- bzw. nachlaufenden Förder- oder Transfervorrichtungen sehr genau eingehalten werden.

Ein wesentlicher Vorteil der Erfindung besteht darin, dass die Drehung des Behälters die Bahn des Kunststoffbehälters entlang des Transfers nicht beeinflusst. Dadurch bleiben die Übergabepositionen im Aufnahmebereich und im Abgabebereich bei beliebigem Drehwinkel stets unverändert. Eine Änderung oder Einstellung des Drehwinkels beeinflusst die Übergabepositionen dank der Erfindung also ebenso wenig wie eine Einstellung der Übergabepositionen den Drehwinkel.

Erfindungsgemäß ist die Transfervorrichtung beispielsweise als drehbar gelagertes Transferrad ausgebildet, wodurch eine konstruktiv einfache Realisierung der Erfindung gegeben ist. Zur Erhöhung der Transferleistung sind vorzugsweise mehrere Haltevorrichtungen mit jeweils einer zugeordneten Orientierungseinheit entlang eines Umfangs des Transferrades verteilt angeordnet.

Die Haltevorrichtung ist bzw. die Haltevorrichtungen weisen vorzugsweise eine Zange als Haltemittel auf, die an einem im Wesentlichen runden Abschnitt im Mündungsbereich der Kunststoffbehälter angreift, insbesondere an oder unterhalb eines Handhabungsringes der Kunststoffbehälter, z.B. an oder unterhalb eines Neckrings.

Eine bevorzugte Ausführung der Erfindung ist dadurch weitergebildet, dass die Haltevorrichtung zusätzlich zu den Haltemitteln eine Abstützvorrichtung zum Abstützen des Kunststoffbehälters aufweist. Dadurch wird insbesondere einem Verkippen des Behälters innerhalb der Haltevorrichtung entgegengewirkt. Des Weiteren wird ermöglicht, die Abstützvorrichtung geeignet auf einen nicht-runden Abschnitt des Kunststoffbehälters anzupassen, so dass ein unbeabsichtigtes Verdrehen des Kunststoffbehälters in der Aufnahmevorrichtung vermieden wird. Die Abstützvorrichtung ist dabei beispielsweise an den Zangenarmen einer als Zange ausgebildeten Haltevorrichtung befestigt, so dass die beiden formatabhängigen Elemente Zange und Abstützvorrichtung in einem Arbeitsschritt getauscht werden können.

Bevorzugt ist die Abstützvorrichtung beabstandet von den Haltemitteln angeordnet und stützt die Kunststoffbehälter in einem Bereich zwischen deren Boden und deren Mündungsbereich ab, weil dadurch ein Verkippen oder Verdrehen besonders vorteilhaft verhindert wird.

Erfindungsgemäß ist der Drehwinkel mittels einer Steuerkurve vorgebbar. Dazu weist die Orientierungsvorrichtung beispielsweise wenigstens eine an einem Hebelarm angeordnete Kurvenrolle auf. Beim Umlaufen der Orientierungseinheit entlang der insbesondere feststehenden Steuerkurve kann so über den Hebel die Drehung des Kunststoffbehälters bewirkt werden. Hierdurch ist eine einfache und zuverlässige Konstruktionsweise ermöglicht. Eine Änderung des Drehwinkels, beispielsweise beim Umrüsten auf eine andere Behälterform, ist außerdem einfach durch Tausch der Steuerkurve möglich.

Im Rahmen der Erfindung sind einseitige Steuerkurven denkbar, die vorzugsweise mit einfachen Kurvenrollen der Orientierungsvorrichtungen zusammenwirken. Dabei werden vorzugsweise Vorspannmittel, beispielsweise Federn, eingesetzt, um die Kurvenrolle an die Steuerkurve zu drücken. Die Erfindung kann jedoch auch mit einer doppelseitigen Steuerkurve realisiert werden, die eine beidseitig begrenzte Gasse für die Kurvenrolle vorgibt. Hierbei kommt vorzugsweise eine doppelte Kurvenrolle zum Einsatz, deren beide Einzelrollen mit jeweils einer Seite der doppelseitigen Steuerkurve zusammenwirken.

Eine erste Alternative der Erfindung ist dadurch ausgezeichnet, dass die Haltevorrichtung konstruktiver Bestandteil der Orientierungsvorrichtung ist. Dabei wird die gewünschte Orientierung von Kunststoffbehältern insbesondere durch eine Drehung der Haltevorrichtung und damit auch des davon gehaltenen Kunststoffbehälters erreicht. Haltevorrichtung und gehaltener Kunststoffbehälter drehen sich gemeinsam. Hierzu weist die Orientierungsvorrichtung beispielsweise einen Grundkörper auf, der mittels des Drehlagers drehbar gelagert ist und mit dem die Haltevorrichtung verbunden ist.

Ein einfacher Formatwechsel wird beispielsweise dadurch ermöglicht, dass die Haltevorrichtung lösbar mit dem Grundkörper verbunden ist. Dabei sind lediglich die tatsächlich vom Format abhängigen Teile, insbesondere die beispielsweise als Haltezangen ausgebildeten Haltemittel der Haltevorrichtung, zu tauschen. Dabei wird insbesondere ermöglicht, eine Haltevorrichtung einzusetzen, wie sie auch an anderen Transfervorrichtungen ohne Orientierungsvorrichtung eingesetzt werden können.

Eine zweite Alternative zur ersten Alternative der Erfindung ist dadurch gekennzeichnet, dass die Haltevorrichtung und die Orientierungsvorrichtung konstruktiv voneinander unabhängig sind. Dabei wird die gewünschte Orientierung von Kunststoffbehältern insbesondere durch eine Drehung des Kunststoffbehälters relativ zur entsprechenden Haltevorrichtung erreicht. Hierzu weist die Orientierungsvorrichtung beispielsweise einen Dorn auf, der in einen im Wesentlichen runden Innenabschnitt des Mündungsbereichs der Kunststoffbehälter angreift, wobei der Dorn mittels des Drehlagers drehbar gelagert ist.

Dabei ist der Dorn vorzugsweise längsaxial zu der Drehachse des Drehlagers verschiebbar ausgebildet. Dadurch ist ermöglicht, dass der Dorn im Aufnahmebereich und im Abgabebereich in Eingriff und außer Eingriff mit dem Kunststoffbehälter gebracht werden kann, z.B. durch Absenken und Anheben in Richtung der Längsachse des Behälters, so dass die Orientierungsvorrichtung keinen Einfluss auf die Übergabe der Kunststoffbehälter hat.

Diese Ausgestaltung der Erfindung hat insbesondere den Vorteil, dass das Halten und das Orientieren der Kunststoffbehälter durch getrennte Bauteile erfolgt. Dadurch werden eine modulare Bauweise der erfindungsgemäßen Transfervorrichtung und viele Gleichteile mit einer Transfervorrichtung ohne Orientierungsvorrichtung ermöglicht. Außerdem können bestehende Transfervorrichtungen ohne Orientierungsvorrichtung nachträglich durch Ergänzen eines geeigneten Moduls mit einer Orientierungsvorrichtung zu erfindungsgemäßen Transfervorrichtungen aufgerüstet werden.

Die der Erfindung zugrundeliegende Aufgabe wird des Weiteren gelöst durch eine Behälterbehandlungsmaschine für Kunststoffbehälter mit einer erfindungsgemäßen Transfervorrichtung. Die erfindungsgemäße Behälterbehandlungsmaschine kann dabei sowohl als Einzelmaschine, beispielsweise als Blasmaschine, als auch als verblockte Maschine mit mehreren Maschinenteilen, beispielsweise als kombinierte Blas- und Füllmaschine, ausgebildet sein.

Die Erfindung wird im Folgenden anhand von Ausführungsbeispielen erläutert, die in den Zeichnungen dargestellt sind. Es zeigen:
- Fig. 1: schematisch eine beispielhafte Blasmaschine gemäß der Erfindung;
- Fig. 2: schematisch eine beispielhafte Transfervorrichtung gemäß der Erfindung in einer Transferstrecke am Ausgang der Blasmaschine aus Fig. 1;
- Fig. 3: schematisch eine erste Ausführungsform einer Orientierungsvorrichtung im Rahmen der Erfindung;
- Fig. 4a und 4b: schematisch eine zweite Ausführungsform einer Orientierungsvorrichtung im Rahmen der Erfindung; und
- Fig. 5: schematisch eine weitere beispielhafte Transfervorrichtung gemäß der Erfindung.

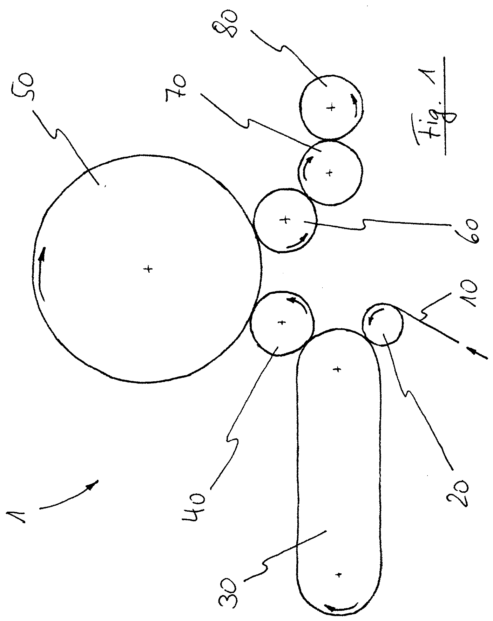

Eine Behälterbehandlungsmaschine gemäß der Erfindung ist schematisch in Fig. 1 gezeigt. Die exemplarische Behälterbehandlungsmaschine ist als Blasmaschine 1 ausgebildet, bei der spritzgegossene Vorformlinge aus einem Kunststoff, beispielsweise PET, zu Behältern verarbeitet werden. Hierzu werden die Vorformlinge bzw. die Behälter in kontinuierlichem Strom mittels geeigneter umlaufender Förderer, zwischen denen die Vorformlinge bzw. Behälter übergeben werden, durch die Blasmaschine 1 gefördert und durchlaufen dabei nacheinander mehrere Behandlungseinrichtungen, z.B. die folgenden Behandlungseinrichtungen:

In einer Preformzuführung 10 werden die Vorformlinge ausgerichtet und zu einer kontinuierlich angestauten Reihe angeordnet. Mittels eines Vereinzelungssterns 20 werden die anstehenden Vorformlinge vereinzelt und an die nachfolgende Heizung 30 übergeben.

In der Heizung 30 werden die Vorformlinge für die anschließende Umformung zu Behältern geeignet thermisch konditioniert. Hierfür werden die Vorformlinge beispielsweise an stationären Heizelementen, z.B. an im Stand der Technik bekannten Heizkästen mit Infrarotstrahlern vorbeigefördert. Eine Profilierung der Vorformlingstemperatur in Längsrichtung kann beispielsweise durch segmentierte Heizelemente erreicht werden, während eine Profilierung der Vorformlingstemperatur in Umfangsrichtung durch geeignetes Drehen und/oder Festhalten der Vorformlinge während des Entlanglaufens an den Heizelementen entlang der Förderstrecke erreicht werden kann.

Die thermisch geeignet konditionierten Vorformlinge werden dann mittels eines Übergaberades 40 an nicht dargestellte Blasstationen auf einem Blasrad 50 übergeben. In einer Blasstation wird üblicherweise ein einzelner Vorformling während in der Regel eines einzigen Umlaufs des Blasrades durch mechanische und pneumatische oder hydraulische Krafteinwirkung zu einem Behälter umgeformt. Hierzu wird der Vorformling beispielsweise mittels einer Reckstange entlang seiner Längsachse mechanisch gereckt und durch Einleiten von Druckfluiden wie Druckluft oder unter Druck gesetzter Flüssigkeiten expandiert, während er in einer Hohlform aufgenommen und nach außen umgeben ist, sodass Axialreckung eine radiale Aufweitung gegen die äußere Form bis zur vollständigen Anlage an die Form erfolgt.

Ausgangsseitig des Blasrades 50 werden die aus den Vorformlingen geformten Behälter von den Blasstationen des Blasrades 50 mittels eines weiteren Übergaberades 60 an eine Transferstrecke übergeben, von der lediglich die ersten zwei Transferräder 70, 80 dargestellt sind. Die Transferstrecke verbindet die Blasmaschine 1 mit nachfolgenden Behandlungsmaschinen, beispielsweise zum Etikettieren, Füllen, Zwischenlagern und/oder Verpacken der Behälter.

Obwohl die Vorformlinge bzw. Behälter in einem kontinuierlichen Strom durch die Blasmaschine 1 gefördert werden, erfolgt dies in der Regel nicht mit konstant bleibenden Abstand zwischen benachbarten Vorformlingen bzw. Behältern. Insbesondere ist es energetisch günstiger, den Abstand aufeinanderfolgender Vorformlinge in der Heizung 30 möglichst gering zu halten, während bedingt durch die Baugröße der Blasstationen auf dem Blasrad 50 ein wesentlich größerer Abstand zwischen den Vorformlingen erforderlich ist. Dieser Teilungsverzug wird auf dem Übergaberad 40 realisiert, indem die Vorformlinge beispielsweise an schwenk- und/oder teleskopierbaren Armen gefördert werden. Auch auf dem Übergaberad 60 erfolgt oftmals ein Teilungsverzug, um den Abstand aufeinanderfolgender Behälter in der Transferstrecke möglichst gering halten und damit die Baugröße der Transferräder 70, 80 möglichst kompakt gestalten zu können.

Die Blasmaschine 1 ist eingerichtet und ausgebildet zur Herstellung von Behältern, die im Querschnitt wenigstens abschnittsweise nicht rund, sondern beispielsweise im Wesentlichen rechteckig oder quadratisch sind. Derartige Behälter, die z.B. eine 2-, 3-, 4- oder eine andere mehrfachzählige Drehsymmetrie aufweisen, müssen durch ihre fehlende Rotationssymmetrie im engeren Sinne in ihrer Orientierung kontrolliert werden, wobei die gewünschten Orientierungen in unterschiedlichen Bereichen der Blasmaschine 1 unterschiedlich sein können und oft auch sind. Auf dem Blasrad 50 ist die Orientierung durch die Lage der Blasstationen und die Trennebene der buchförmig aufklappbaren Formhälften fest vorgegeben, während beispielsweise auf dem Transferrad 80 und der weiteren Transferstrecke jeweils eine der Seitenflächen für eine optimale Abstützung des Behälters orthogonal zu dem Radius des Transferrades 80 stehen sollte. Um diesen unterschiedlichen Anforderungen gerecht zu werden, ist z.B. das Transferrad 70 als Transfervorrichtung gemäß der Erfindung ausgebildet und ermöglicht eine Drehung der Behälter um ihre Längsachse von der vorgegebenen Orientierung auf dem Blasrad 50 in die gewünschte Orientierung auf dem Transferrad 80.

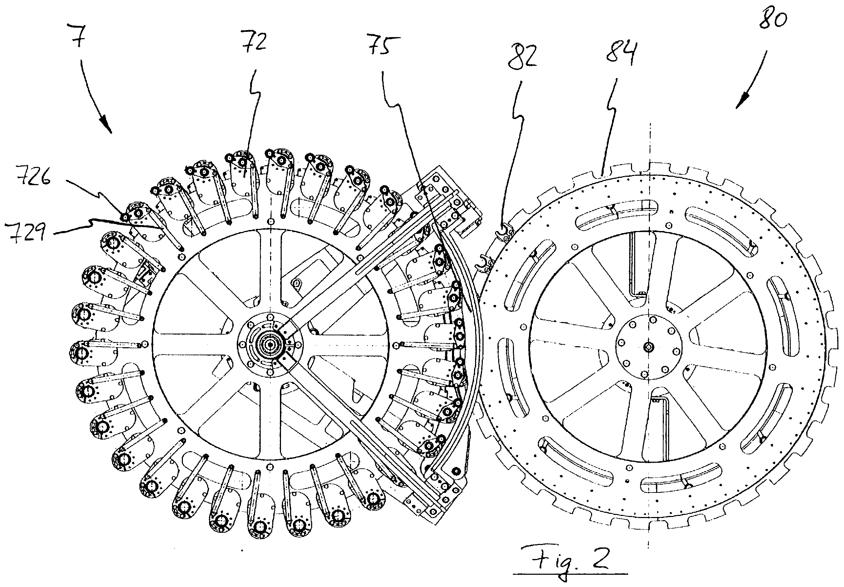

Eine detaillierte schematische Ansicht der Transferräder 70 und 80 der Blasmaschine 1 ist in Fig. 2 dargestellt. Die Transferräder 70, 80 weisen entlang ihres Umfangs jeweils dreißig Förderstationen für jeweils einen Behälter auf. Die Förderstationen eines Transferrades 70, 80 sind dabei alle gleich konstruiert, in Fig. 2 jedoch aus Darstellungsgründen teilweise nicht mit allen Einzelelementen gezeigt. So sind bei einzelnen Förderstationen auch Details erkennbar, die ansonsten von anderen Elementen derselben Förderstation verdeckt wären. Die Zahl der Förderstationen kann auch abweichend gewählt sein, marktüblich sind 24-36 Stationen, wobei gerade Zahlen üblich sind. Ohnehin ist die in den gezeigten Beispielen dargestellte Anzahl an Stationen, Transferrädern oder Behandlungseinrichtungen nicht erfindungswesentlich, sondern dient lediglich der Erklärung von Grundprinzipien.

Die Förderstationen des Transferrades 80 weisen jeweils eine Zange 82 zum Eingriff an dem Mündungsbereich des Behälters und eine Abstütztasche 84 zur Abstützung am Behälterkörper auf. Die Form der Abstütztasche 84 ist exemplarisch an den im wesentlichen quadratischen Querschnitt des Behälters angepasst. Eine Förderstrecke kann beispielsweise mehrere hintereinander angeordnete Transferräder 80 aufweisen, um die erforderliche Länge der Förderstrecke zu erreichen.

Im Gegensatz zu dem einfachen Transferrad 80 weist das Transferrad 70 gemäß der Erfindung anstelle der Zangen und Taschen jeweils eine Orientierungseinheit 72 pro Förderstation auf. Zusätzlich ist eine feststehende, einseitige Steuerkurve 75 im Abgabebereich, d.h. im Bereich der Übergabe zum Transferrad 80, vorgesehen, mit der die umlaufenden Orientierungseinheiten 72 zusammenwirken. Hierfür weist jede Orientierungseinheit eine Kurvenrolle 726 auf, die mittels einer Rückstellfeder 729 gegen die Steuerkurve 75 gedrückt wird. Ein nicht gezeigter Anschlag begrenzt dabei die Wirkung der Rückstellbewegung in den Bereichen des Umlaufs des Transferrades 70 abseits der Steuerkurve 75. Der Anschlag ist dabei derart eingestellt, dass die Stellung der Orientierungseinheit 72 im Aufnahmebereich, d.h. bei der Übernahme der Behälter vom Übergaberad 60 aus Fig. 1, zu der Orientierung der übergebenen Behälter passt.

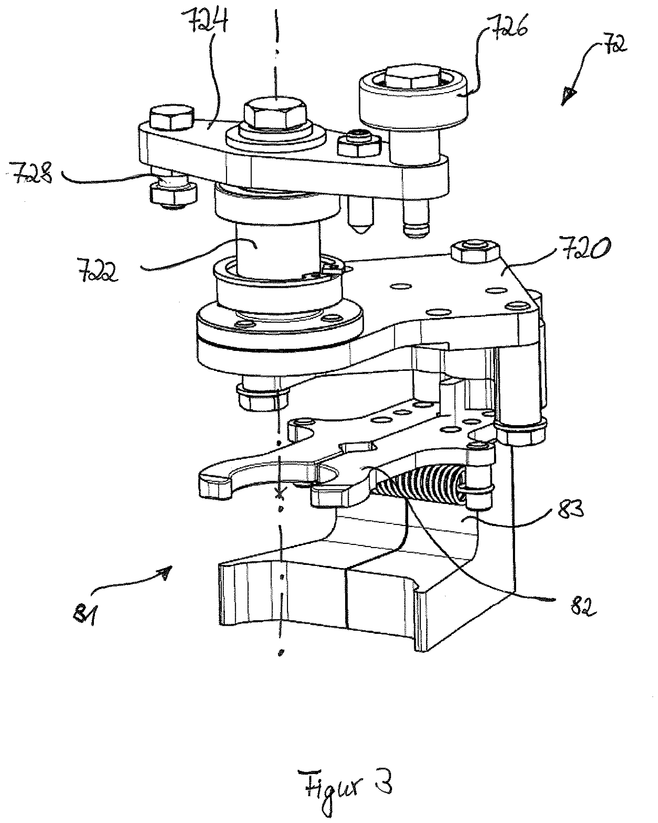

Eine schematische Darstellung einer Orientierungseinheit 72 ist in Fig. 3 gezeigt. Die Orientierungseinheit weist einen Grundkörper 720 auf, der mittels eines Drehlagers 722 schwenkbar an dem Transferrad 70 gelagert ist. An dem Grundkörper 720 ist eine Zange 82 zum Eingriff an einem Mündungsbereich eines Behälters austauschbar befestigt. An den beiden Armen der Zange 82 sind jeweils Abstützkörper 83 angeordnet, an denen sich der Behälterkörper abstützen kann. Die Abstützkörper 83 sind dabei geeignet an die Kontur des Behälters in dem entsprechenden Bereich angepasst.

Die durch die Zange 82 vorgegebene bestimmungsgemäße Lage oder Haltelage der Längsachse des Behälters ist durch eine strichpunktierte Linie angedeutet. Das Drehlager 722 ist koaxial zu dieser Lage angeordnet, so dass die Lage der Behälterlängsachse relativ zur Zange 82 und damit zum Transferrad 70 für alle möglichen Drehwinkel gleich bleibt.

Auf der durch das Drehlager 722 führenden Achse ist ein drehfest mit dem Grundkörper 720 verbundener Hebelarm 724 vorgesehen, der eine Kurvenrolle 726 zum Eingriff mit der Steuerkurve 75 trägt. Außerdem trägt der Hebelarm 724 eine Befestigung 728 für die Rückstellfeder 729, die in Fig. 3 nicht dargestellt ist, aber in Figur 2 gezeigt ist.

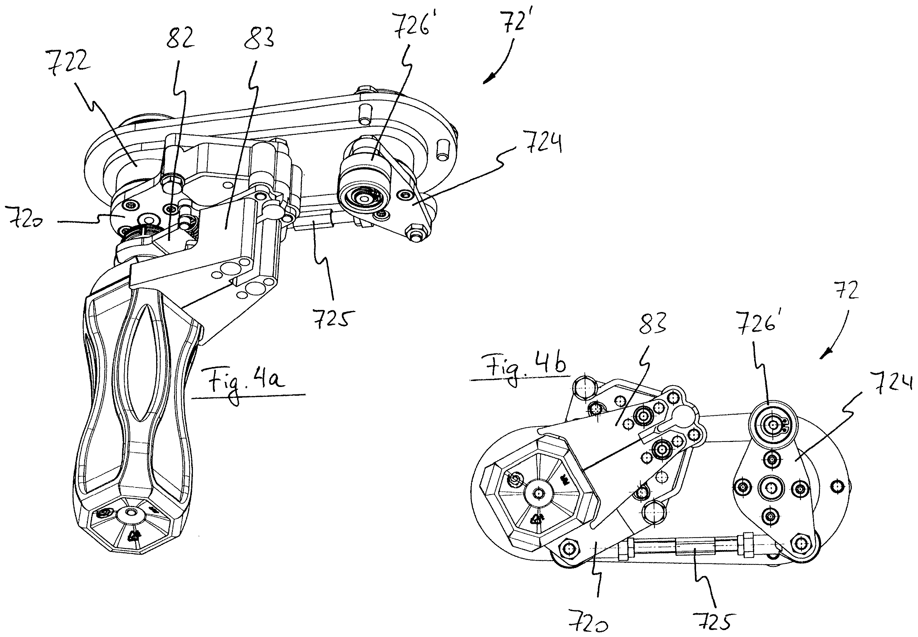

Eine alternative erfindungsgemäße Orientierungseinheit 72' ist schematisch in Fig. 4a in perspektivischer Ansicht von schräg unten und in Fig. 4b in einer Ansicht senkrecht von unten her dargestellt. In den Fig. 4a und 4b ebenfalls gezeigt ist ein exemplarischer Behälter in der bestimmungsgemäßen Haltelage.

Die alternative Orientierungseinheit 72' unterscheidet sich von der in Fig. 3 gezeigten Orientierungseinheit 72 darin, dass der Hebelarm 724 auf einer weiteren, zur Drehachse des Drehlagers 722 parallel versetzt angeordneten Drehachse angeordnet ist. Dabei sind der Hebelarm 726 und der Grundkörper 720 mittels einer Koppelstange 725 miteinander verbunden, so dass die steuerkurveninduzierte Drehung des Hebelarms 724 auf den Grundkörper 720 übertragen wird. Die Koppelstange 725 ist dabei über eine Einstellschraube in ihrer Länge verstellbar, so dass die relative Lage des Grundkörpers 720 zum Hebelarm 724 verändert und angepasst werden kann.

Ein weiterer Unterschied besteht darin, dass die Kurvenrolle 726' der alternativen Orientierungseinheit 72' als doppelte Kurvenrolle 726' für den Eingriff in eine doppelseitige Steuerkurve ausgebildet ist. Eine Rückstellfeder ist entsprechend nicht notwendig und nicht vorgesehen.

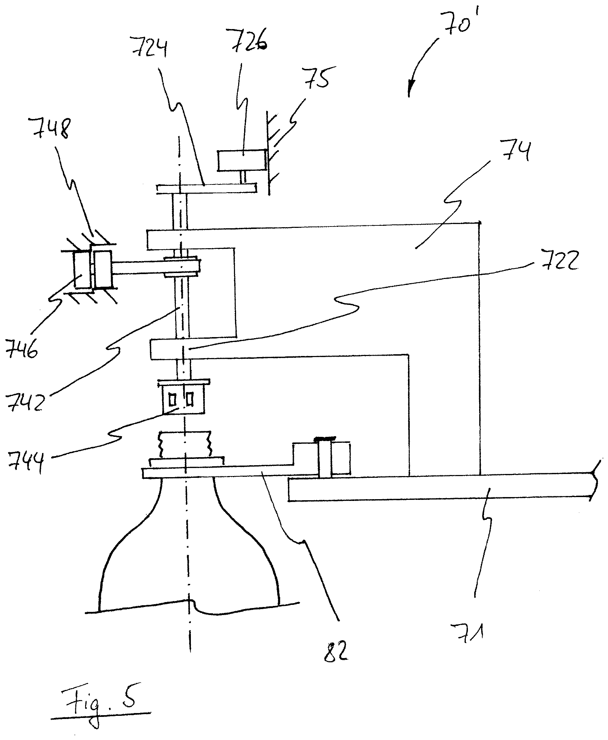

Ein weiteres Ausführungsbeispiel der Erfindung ist in Fig. 5 dargestellt. Hierbei handelt es sich um ein Transferrad 70' mit einer rotierenden Tragscheibe 71, die eine Zange 82 zum Halten eines Behälters trägt. Die durch die Zange 82 vorgegebene bestimmungsgemäße Haltelage für die Längsachse des Behälters ist wiederum als strichpunktierte Linie angedeutet.

Die Tragscheibe 71 trägt des Weiteren ein Orientierungsmodul 74 zum Drehen des Behälters in der Zange 82. Das Orientierungsmodul 74 ist vorzugsweise derart konstruiert, dass einerseits das Transferrad 70' ohne Orientierungsmodul 74 als reguläres Transferrad ohne Orientierungsfunktion eingesetzt werden kann, beispielsweise wie das Transferrad 80 in Fig. 1. Darüber hinaus ermöglicht ein entsprechend angepasstes Orientierungsmodul 74, ein bestehendes Transferrad ohne Orientierungsfunktion nachträglich aufzurüsten und so zu einer erfindungsgemäßen Transfervorrichtung zu verbessern.

Das Orientierungsmodul 74 weist einen koaxial zu der Haltelage bzw. zur Längsachse des Behälters ausgerichteten Dorn 742 auf, der mittels eines Drehlagers 722 drehbar gelagert ist, wobei die Haltelage und die Drehachse des Drehlagers im Raum zusammenfallen. Über eine feststehende Steuerkurve 75 und eine Kurvenrolle 726, die an einem drehfest mit dem Dorn 742 verbundenen Hebelarm 724 angeordnet ist, wird die Drehung des Behälters beim Umlaufen der Tragscheibe kontrolliert.

Der Dorn 742 weist einen Greifkopf 744 auf, der an die Innenkontur im Mündungsbereich des Behälters angepasst ist. Der Greifkopf 744 wird vor der Drehung des Dorns 742 mit dem Behälter in Eingriff gebracht und nach der Drehung des Dorns 742 wieder aus dem Mündungsbereich des Behälters entfernt. Hierfür ist eine zweiseitige, feststehende Hubkurve 748 und eine doppelte Kurvenrolle 746 vorgesehen, mittels derer der Dorn 742 abgesenkt bzw. angehoben werden kann. Dabei ist die doppelte Kurvenrolle 746 derart an den Dorn angebunden, dass sich der Dorn 746 mit der Kurvenrolle hebt und senkt, aber um die Längsachse des Behälters frei drehen kann. Die Klemmkraft des Greifkopfes ist dabei so bemessenen, dass die über den Hebelarm ausgeübte Drehkraft den Behälter drehbewegt während des Angriffs der Zange 82 am Mündungsbereich des Behälters.

## Patentansprüche

1. Transfervorrichtung (70, 70') für Kunststoffbehälter, die eine Längsachse aufweisen, umfassend wenigstens eine, bevorzugt mehrere, auf einer geschlossenen Bahn umlaufende Haltevorrichtungen (81) für jeweils einen der Kunststoffbehälter, weiterhin umfassend eine Orientierungsvorrichtung (72, 72', 74) zum Drehen des Kunststoffbehälters mit einem vorgebbaren Drehwinkel um seine Längsachse, wobei die Kunststoffbehälter mittels der wenigstens einen Haltevorrichtung (81) von einem Aufnahmebereich zu einem Abgabebereich transportiert werden, wobei die Haltevorrichtung (81) Haltemittel (82) aufweist, durch die eine bestimmungsgemäße Haltelage für die Längsachse der Kunststoffbehälter vorgegeben ist, **dadurch gekennzeichnet, dass** die Orientierungsvorrichtung (72, 72', 74) ein Drehlager (722) für die Drehung des mittels der Haltevorrichtung (82) transportierten Kunststoffbehälters aufweist, wobei das Drehlager (722) koaxial zu der bestimmungsgemäßen Haltelage für die Längsachse der Kunststoffbehälter angeordnet ist, wobei der Drehwinkel mittels einer Steuerkurve (75) vorgebbar ist.

2. Transfervorrichtung (70, 70') nach Anspruch 1, wobei die Orientierungsvorrichtung (72, 72', 74) wenigstens eine mit der Steuerkurve (75) zusammenwirkende, an einem Hebelarm (724) angeordnete Kurvenrolle (726) aufweist

3. Transfervorrichtung (70, 70') nach Anspruch 1 oder 2, **dadurch gekennzeichnet, dass** die Transfervorrichtung (70, 70') als drehbar gelagertes Transferrad (70, 70') ausgebildet ist, wobei insbesondere mehrere Haltevorrichtungen (81) mit jeweils einer zugeordneten Orientierungseinheit (72, 72', 74) entlang eines Umfangs des Transferrades (70, 70') verteilt angeordnet sind.

4. Transfervorrichtung (70, 70') nach einem der Ansprüche 1 bis 3, **dadurch gekennzeichnet, dass** die Haltevorrichtung (81) eine Zange (82) als Haltemittel aufweist, die an einem im Wesentlichen runden Abschnitt im Mündungsbereich der Kunststoffbehälter angreift, insbesondere an oder unterhalb eines Handhabungsringes der Kunststoffbehälter.

5. Transfervorrichtung (70, 70') nach einem der Ansprüche 1 bis 4, **dadurch gekennzeichnet, dass** die Haltevorrichtungen (81) zusätzlich zu den Haltemitteln (82) eine Abstützvorrichtung (83) zum Abstützen des Kunststoffbehälters aufweist, wobei die Abstützvorrichtung (83) bevorzugt beabstandet von den Haltemitteln (82) angeordnet ist und die Kunststoffbehälter in einem Bereich zwischen deren Boden und deren Mündungsbereich abstützt.

6. Transfervorrichtung (70, 70') nach einem der Ansprüche 1 bis 5, **dadurch gekennzeichnet, dass** die Haltevorrichtung (81) konstruktiver Bestandteil der Orientierungsvorrichtung (72, 72') ist.

7. Transfervorrichtung (70, 70') nach Anspruch 6, **dadurch gekennzeichnet, dass** die Orientierungsvorrichtung (72, 72') einen Grundkörper (720) aufweist, der mittels des Drehlagers (722) drehbar gelagert ist und mit dem die Haltevorrichtung (81) verbunden ist, wobei die Haltevorrichtung (81) vorzugsweise lösbar mit dem Grundkörper (720) verbunden ist.

8. Transfervorrichtung (70, 70') nach einem der Ansprüche 1 bis 5, **dadurch gekennzeichnet, dass** die Haltevorrichtung (81) und die Orientierungsvorrichtung (74) konstruktiv voneinander unabhängig sind.

9. Transfervorrichtung (70, 70') nach Anspruch 8, **dadurch gekennzeichnet, dass** die Orientierungsvorrichtung (74) einen Dorn (742) aufweist, der in einen im Wesentlichen runden Innenabschnitt des Mündungsbereichs der Kunststoffbehälter eingreift, wobei der Dorn (742) mittels des Drehlagers (722) drehbar gelagert ist und vorzugsweise längsaxial zu der Drehachse des Drehlagers (722) verschiebbar ausgebildet ist.

10. Behälterbehandlungsmaschine (1) für Kunststoffbehälter, die eine Längsachse aufweisen, insbesondere Blasmaschine oder kombinierte Blas- und Füllmaschine, mit einer Transfervorrichtung (70, 70') nach einem der Ansprüche 1 bis 9.

## Claims

1. A transfer device (70, 70') for plastic containers that comprises a longitudinal axis, comprising at least one, preferably a plurality of holding devices (81) for each of the plastic containers circumferentially running on a closed track, furthermore comprising an orientation device (72, 72', 74) for rotating the plastic container with a specifiable angle of rotation around its longitudinal axis, wherein the plastic containers are separated from a pick-up area by means of at least one holding device (81) to a delivery area, wherein the holding device (81) comprises holding means (82) via which an intended holding position for the longitudinal axis of the plastic containers is predetermined, **characterized in that** the orientation device (72, 72', 74) comprises a pivot bearing (722) for rotating the plastic container transported by means of the holding device (82), wherein the pivot bearing (722) is arranged coaxially to the intended holding position for the longitudinal axis of the plastic container, wherein the angle of rotation can be specified by means of a control cam (75).

2. The transfer device (70, 70') according to Claim 1, wherein the orientation device (72, 72', 74) comprises at least one cam roller (726) interacting with the control cam (75) and arranged on a lever arm (724).

3. The transfer device (70, 70') according to Claim 1 or 2, **characterized in that** the transfer device (70, 70') is designed as a rotatable transfer wheel (70, 70'), wherein, in particular, a plurality of holding devices (81) each with an assigned orientation unit (72, 72', 74) are distributed along a circumference of the transfer wheel (70, 70').

4. The transfer device (70, 70') according to any one of the Claims 1 to 3, **characterized in that** the holding device (81) comprises pincers (82) as a holding means which engages on an essentially round section in the mouth area of the plastic containers, in particular, on or below a handling ring of the plastic containers.

5. The transfer device (70, 70') according to any one of Claims 1 to 4, **characterized in that** the holding device (81), in addition to the holding means (82), comprises a support device (83) for supporting the plastic container, wherein the support device (83) is preferably arranged at a distance from the holding devices (82) and supports the plastic containers in an area between their bottom and their mouth area.

6. The transfer device (70, 70') according to any one of Claims 1 to 5, **characterized in that** the holding device (81) is a constructive part of the orientation device (72, 72').

7. The transfer device (70, 70') according to Claim 6, **characterized in that** the orientation device (72, 72') comprises a base body (720) which is rotatable by means of the pivot bearing (722) and to which the holding device (81) is connected, wherein the holding device (81) is preferably detachably connected to the base body (720).

8. The transfer device (70, 70') according to any one of Claims 1 to 5, **characterized in that** the holding device (81) and the orientation device (74) are structurally independent of each other.

9. The transfer device (70, 70') according to Claim 8, **characterized in that** the orientation device (74) comprises a mandrel (742) which engages in an essentially round inner portion of the mouth region of the plastic containers, wherein the mandrel (742) is rotatable by means of the pivot bearing (722) and is preferably designed to be displaced longitudinally axially to the axis of rotation of the pivot bearing (722).

10. A container handling machine (1) for plastic containers comprising a longitudinal axis, in particular, a blow moulding machine or combined blowing and filling machine, comprising a transfer device (70, 70') according to any one of the Claims 1 to 9.

## Revendications

1. Dispositif de transfert (70, 70') pour récipients en matière plastique qui présentent un axe longitudinal, comprenant au moins un et de préférence plusieurs dispositifs de maintien (81) circulant selon un parcours fermé pour transporter respectivement l'un des récipients en matière plastique, comprenant en outre un dispositif d'orientation (72, 72', 74) pour opérer une rotation du récipient en matière plastique autour de son axe longitudinal selon un angle de rotation prédéfinissable, les récipients en matière plastique étant transportés au moyen du (des) dispositif(s) de maintien (81) d'une zone de réception vers une zone de transfert, le dispositif de maintien (81) présentant des moyen de maintien (82) par lesquels les récipients en matière plastique sont maintenus selon une position de maintien prévue de leur axe longitudinal, **caractérisé en ce que** le dispositif d'orientation (72, 72', 74) présente un palier de pivotement (722) pour le pivotement du récipient en matière plastique transporté au moyen du dispositif de maintien (82), l'agencement du palier de pivotement (722) étant coaxial par rapport à la position de maintien prévue pour l'axe longitudinal du récipient en matière plastique, l'angle de rotation étant prédéfinissable au moyen d'une came de commande (75).

2. Dispositif de transfert (70, 70') selon la revendication 1, le dispositif d'orientation (72, 72', 74) présentant au moins un galet de came (726) agissant conjointement avec la came de commande (75) et agencé sur un levier (724).

3. Dispositif de transfert (70, 70') selon la revendication 1 ou 2, **caractérisé en ce que** le dispositif de transfert (70, 70') est conçu sous forme de roue de transfert (70, 70') logée de manière à pouvoir tourner, avec notamment plusieurs dispositifs de maintien (81) respectivement associés à un dispositif d'orientation (72, 72', 74) et répartis le long de la périphérie de la roue de transfert (70, 70').

4. Dispositif de transfert (70, 70) selon l'une des revendications 1 à 3, **caractérisé en ce que** le dispositif de maintien (81) présente une pince (82) en guise de moyen de maintien, laquelle saisit une partie essentiellement ronde de la section d'embouchure du récipient en matière plastique, notamment au niveau de ou sous une collerette de manipulation du récipient en matière plastique.

5. Dispositif de transfert (70, 70) selon l'une des revendications 1 à 4, **caractérisé en ce que** les dispositifs de maintien (81) présentent, outre les moyen de maintien (82), un dispositif d'appui (83) pour soutenir le récipient en matière plastique, ce dispositif d'appui (83) étant de préférence agencé à une certaine distance des moyen de maintien (82) et les récipients en matière plastique s'y appuyant avec une zone située entre leur fond et leur section d'embouchure.

6. Dispositif de transfert (70, 70) selon l'une des revendications 1 à 5, **caractérisé en ce que** le dispositif de maintien (81) est un élément constructif du dispositif d'orientation (72, 72').

7. Dispositif de transfert (70, 70') selon la revendication 6, **caractérisé en ce que** le dispositif d'orientation (72, 72') présente un corps de base (720), lequel est logé de façon à pouvoir pivoter au moyen du palier de pivotement (722) et auquel le dispositif de maintien (81) est relié, la liaison entre le dispositif de maintien (81) et le corps de base (720) étant de préférence amovible.

8. Dispositif de transfert (70, 70) selon l'une des revendications 1 à 5, **caractérisé en ce que** le dispositif de maintien (81) et le dispositif d'orientation (74) sont constructivement indépendants l'un de l'autre.

9. Dispositif de transfert (70, 70') selon la revendication 8, **caractérisé en ce que** le dispositif d'orientation (74) présente une broche (742) qui s'engage dans une section intérieure essentiellement ronde de la section d'embouchure du récipient en matière plastique, la broche (742) étant logée de façon à pouvoir pivoter au moyen du palier de pivotement (722) et de préférence conçue de façon déplaçable longitudinalement et axialement par rapport à l'axe de rotation du palier de pivotement (722).

10. Machine de traitement de récipients (1) en matière plastique qui présentent un axe longitudinal, en particulier une machine de moulage par soufflage ou une machine combinée de moulage par soufflage et de remplissage, avec un dispositif de transfert (70, 70') selon l'une des revendications 1 à 9.
